# EUROPEAN PATENT SPECIFICATION

(11) **EP 3 238 943 B1**
(45) Date of publication and mention of the grant of the patent: **18.06.2025**
(21) Application number: 15872724.8
(22) Date of filing: 09.12.2015
(51) Int. Cl.: B41J 2/19, B01D 19/00, B01D 61/00, B01D 63/02, B01D 71/26, B41J 2/175

(54) **HOLLOW-FIBER DEGASSING MODULE AND INKJET PRINTER**
HOHLFASERENTGASUNGSMODUL UND TINTENSTRAHLDRUCKER
MODULE DE DÉGAZAGE À FIBRES CREUSES ET IMPRIMANTE À JET D'ENCRE

(30) Priority: 24.12.2014 JP 2014260807
(43) Date of publication of application: 01.11.2017
(73) Proprietor: DIC Corporation, Tokyo 174-8520 (JP)
(72) Inventor: SUGANUMA Youhei, Ichihara-shi Chiba 290-8585 (JP); OI Kazumi, Ichihara-shi Chiba 290-8585 (JP)
(74) Representative: TBK
(86) International application number: PCT/JP2015/084572
(87) International publication number: WO 2016/104155

(56) References cited:
- EP-A2- 1 243 310
- JP-A- 2007 130 907
- JP-A- 2009 270 256
- JP-A- H01 295 910
- JP-A- H10 296 005
- JP-A- H10 324 502
- US-A1- 2010 116 129
- US-A1- 2013 327 219
- US-B2- 6 939 392

## Description

The present invention relates to a hollow fiber degassing module according to claim 1. The features of the preamble of claim 1 are disclosed in document US 2013/0327219 A1. Such a hollow fiber degassing module degases a liquid and an inkjet printer which includes the hollow fiber degassing module.

An inkjet printer is a printing machine using a system in which droplets of ink are directly sprayed onto a printing medium. In such an inkjet printer, there is a possibility that a gas dissolved in the ink is gasified due to a change in pressure inside an ink storage portion during printing so that a nozzle is blocked. As a result, there is a risk that printing quality is noticeably degraded. This risk becomes remarkable in a long-term use and a high-speed operation. In order to solve such a problem, it is effective to perform degassing to remove dissolved gas and bubbles from the ink. As a method of effectively degassing the ink, document WO 2007/063720 A2 discloses a method of continuously degassing the ink by attaching a hollow fiber degassing module using a hollow fiber membrane to an ink passage reaching an inkjet head from an ink storage portion. The hollow fiber degassing module disclosed in document WO 2007/063720 A2 is an external perfusion type hollow fiber degassing module and a hollow fiber membrane bundle obtained by bundling a plurality of hollow fiber membranes is received in a cylindrical body. Then, the ink is supplied to the outside of the hollow fiber membrane and the inside of the hollow fiber membrane is depressurized to degas the ink, and the degassed ink is discharged from a discharge port formed in a side wall of the cylindrical body.

Further, most inkjet printers supply ink from the ink storage portion to the inkjet head by the own weight of the ink. For this reason, it is required to further suppress the pressure drop of the ink in the hollow fiber degassing module. Incidentally, in a general hollow fiber degassing module, an ink distribution pipe which penetrates a cylindrical body is disposed at the inside of the hollow fiber membrane bundle in the radial direction. A plurality of holes are formed at predetermined positions of the ink distribution pipe in order to equally distribute the ink to the entire hollow fiber membrane bundle. However, when the ink is supplied to the hollow fiber membrane bundle through the ink distribution pipe, the pressure drop of the ink increases. Here, document JP 4730483 B proposes a method of manufacturing a hollow fiber degassing module which does not include an ink distribution pipe in order to reduce the pressure drop of the ink.

Document US 2013/0327219 A1 discloses an improved liquid degassing membrane contactor or module, which includes a high pressure housing and at least one degassing cartridge therein. The cartridge comprises a center tube, a baffle and a membrane mat 156, which is separated into two portions by the baffle.

Document EP 1 243 310 A2 discloses a method for debubbling an ink. The method comprises the steps of
- providing an ink having an entrained gas;
- providing a membrane contactor comprising a plurality of integrally asymmetric hollow fiber microporous membranes;
- a membrane defining within the contactor a lumen side and a shell side;
- providing a vacuum source;
- passing the gas entrained ink through the shell side of the contactor;
- applying the vacuum source to the lumen side of the contactor; and
- debubbling the gas entrained ink across the membrane.

In recent years, ceramic ink in which ceramic powder is dispersed in an organic solvent has been used as ink used in an inkjet printer. However, when the ceramic ink is degassed by the hollow fiber degassing module described in document JP 4730483 B, there is a case in which the feeding of the ink fails in a few days. Here, as a result of examination of such a reason, the inventors found that the pressure drop of the hollow fiber degassing module suddenly increased with the degassing of the ink so that the feeding of the ink failed.

Document JP H10 296 005 A discloses a method to generate a great amount of ultradeaerated water by a vacuum pump of a small capacity by a method wherein a membrane module of a specific oxygen permeation rate, and a membrane module of the specific oxygen permeation rate and a steam permeation rate are combined, and a vacuum pressure to a gas phase side is specified.

Here, the object of the invention is to provide a hollow fiber degassing module and an inkjet printer capable of suppressing a sudden increase in pressure drop.

The object of the invention is achieved by a degassing module according to claim 1, and the liquid degassing method of degassing an ink according to claim 3. Advantageous embodiments are carried out according to the dependent claims.

The inventors examined a reason why the pressure drop of the hollow fiber degassing module increased. As a result, it was found that the pressure drop of the hollow fiber degassing module suddenly increased when the ink flowed to the hollow fiber degassing module so that the hollow fiber membrane was swollen by the ink to narrow or block the ink passage. Specifically, since both end portions of the hollow fiber membrane bundle are fixed to the cylindrical body, the hollow fiber membrane is twisted and flattened when the hollow fiber membrane is swollen. Then, a hollow portion which is an ink passage is formed at the inside of the hollow fiber membrane bundle in the radial direction. For this reason, the swollen hollow fiber membrane enters the hollow portion to narrow or block the hollow portion. Further, a gap between the hollow fiber membranes is also used as the ink passage, but the swollen hollow fiber membrane also narrows or blocks the gap between the hollow fiber membranes. The invention has been contrived based on such findings.

That is, a hollow fiber degassing module according to an aspect of the invention includes a hollow fiber membrane bundle obtained by bundling a plurality of hollow fiber membranes in a cylindrical shape and a cylindrical body receiving the hollow fiber membrane bundle and extending in an axial direction and degasses a liquid by supplying the liquid to a gap between the hollow fiber membranes from a hollow portion of the hollow fiber membrane bundle and depressurizing the inside of the hollow fiber membrane, the hollow fiber degassing module including a support body which contacts an inner peripheral surface of the hollow fiber membrane bundle.

The hollow fiber degassing module according to an aspect of the invention is of an external perfusion type in which a liquid is supplied to the outside of the hollow fiber membrane and the inside of the hollow fiber membrane is depressurized to degas the liquid. For this reason, the pressure drop of the liquid can be suppressed to be small. Then, since the hollow fiber degassing module includes the support body which contacts the inner peripheral surface of the hollow fiber membrane bundle, each hollow fiber membrane is supported by the support body from the center of the hollow fiber membrane bundle in the radial direction. For this reason, it is possible to suppress the hollow fiber membrane from being twisted even when the hollow fiber membrane is swollen by the liquid. That is, it is possible to suppress the swollen hollow fiber membrane from entering the hollow portion of the hollow fiber membrane bundle corresponding to the liquid passage so that the hollow portion is narrowed or blocked. Further, it is possible to suppress the swollen hollow fiber membrane from narrowing or blocking the gap between the hollow fiber membranes. In this way, since it is possible to suppress the liquid passage from being narrowed or blocked even when the hollow fiber membrane is swollen, it is possible to suppress a sudden increase in pressure drop of the hollow fiber degassing module.

In the hollow fiber membrane module, the support body has a cylindrical shape.

In the hollow fiber membrane module, the support body has a mesh shape.

In the hollow fiber membrane module, the support body is disposed between one end surface and the other end surface of the hollow fiber membrane bundle in a center axis direction of the hollow fiber membrane.

An inkjet printer according to an aspect of the invention is an inkjet printer in which ink stored in an ink storage portion is supplied to an inkjet head through an ink passage, and the above-described hollow fiber degassing module is attached to the ink passage.

In the inkjet printer according to an aspect of the invention, since the hollow fiber degassing module is attached to the ink passage, it is possible to suppress a sudden increase in pressure drop of the ink passage and to degas the ink for a long period of time.

According to an aspect of the invention, a sudden increase in pressure drop can be suppressed.

### Brief Description of Drawings

Fig. 1 is a schematic configuration diagram of an inkjet printer according to an embodiment.
Fig. 2 is a schematic cross-sectional view of a hollow fiber degassing module according to the embodiment.
Fig. 3 is a partially enlarged view of a hollow fiber membrane bundle shown in Fig. 2.
Fig. 4 is a cross-sectional view taken along a line IV-IV shown in Fig. 2.
Fig. 5 is a perspective view of a support body.
Fig. 6 is a perspective view of a support body.
Fig. 7 is a schematic configuration diagram of a test circuit.
Fig. 8 is a diagram showing an experiment result of Example 1 as a graph.
Fig. 9 is a diagram showing an experiment result of Example 2 as a graph.
Fig. 10 is a diagram showing an experiment result of Example 3 as a graph.
Fig. 11 is a diagram showing an experiment result of Comparative Example 1 as a graph.

Hereinafter, a hollow fiber degassing module and an inkjet printer of an embodiment will be described in detail with reference to the drawings. The hollow fiber degassing module of the embodiment is obtained by applying a hollow fiber degassing module of the invention to a hollow fiber degassing module for degassing ink. Additionally, in all drawings, the same or corresponding parts are denoted by the same reference numerals, and redundant description is omitted.

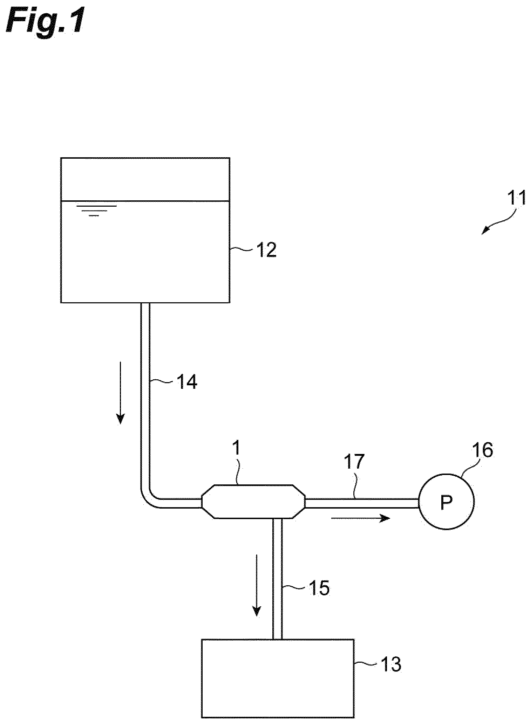

Fig. 1 is a schematic configuration diagram of an inkjet printer according to an embodiment. As shown in Fig. 1, an inkjet printer 11 according to the embodiment mainly includes an ink storage portion 12 which is an ink tank for storing ink, an inkjet head 13 which directly sprays dropletized ink to a printing medium, a first ink supply pipe 14 to which ink is supplied from the ink storage portion 12, a second ink supply pipe 15 which supplies ink to the inkjet head 13, a hollow fiber degassing module 1 according to the embodiment which is attached to the first ink supply pipe 14 and the second ink supply pipe 15 and degases ink, a suction pump 16 which is used for a vacuum suctioning operation, and an intake pipe 17 which connects the suction pump 16 and the hollow fiber degassing module 1 to each other. Additionally, the first ink supply pipe 14 and the second ink supply pipe 15 are ink passages which reach the inkjet head 13 from the ink storage portion 12. The ink used in the inkjet printer 11 is not particularly limited and includes, for example, aqueous ink, UV ink, solvent ink, and ceramic ink.

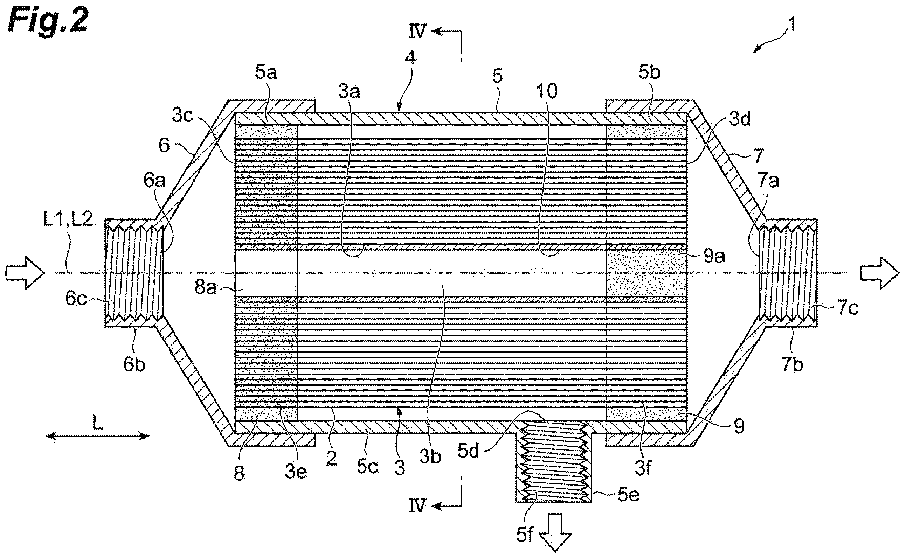

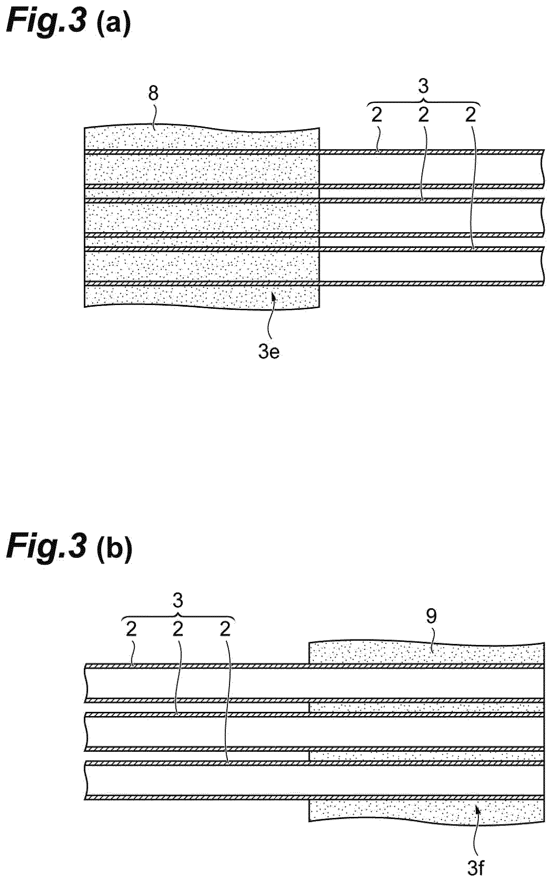

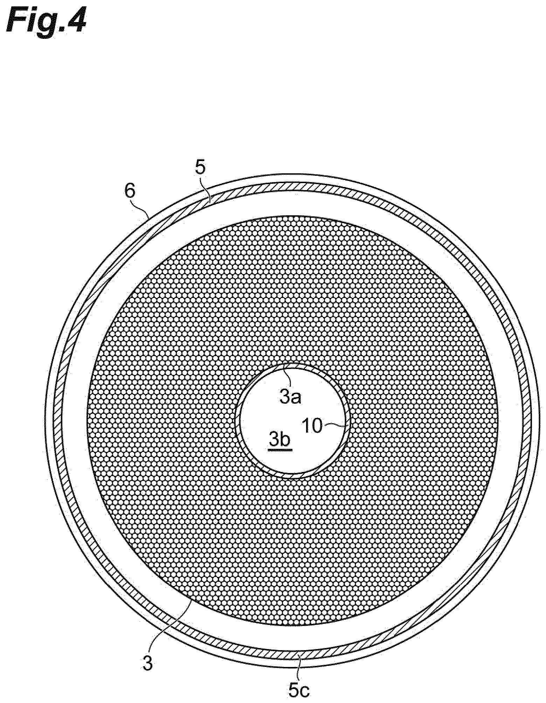

Fig. 2 is a schematic cross-sectional view of the hollow fiber degassing module according to the embodiment. Fig. 3 is a partially enlarged view of the hollow fiber membrane bundle shown in Fig. 2. Fig. 4 is a cross-sectional view taken along a line IV-IV shown in Fig. 2. As shown in Figs. 1 to 4, the hollow fiber degassing module 1 includes a hollow fiber membrane bundle 3 in which a plurality of hollow fiber membranes 2 are bundled in a cylindrical shape, a support body 10 which contacts an inner peripheral surface 3a of the hollow fiber membrane bundle 3, and a housing 4 which receives the hollow fiber membrane bundle 3. The hollow fiber degassing module 1 degases ink by supplying the ink to a gap between the hollow fiber membranes 2 from a hollow portion 3b of the hollow fiber membrane bundle 3 and depressurizing the inside of the hollow fiber membrane 2. The hollow portion 3b is a hollow portion which is located at the inside in the radial direction of the hollow fiber membrane bundle 3 formed in a cylindrical shape. Additionally, in Fig. 4, the hollow fiber membranes 2 are schematically depicted and are different from the actual shapes.

The hollow fiber membrane 2 is a hollow fiber-shaped membrane which allows the permeation of a gas but does not allow the permeation of a liquid. The hollow fiber membrane 2 has a property that the hollow fiber membrane is swollen by the ink. The material, the membrane shape, and the membrane form, and the like of the hollow fiber membrane 2 are not particularly limited. Examples of the material of the hollow fiber membrane 2 include polyolefin-based resins such as polypropylene and poly(4-methylpentene-1), silicon-based resins such as polydimethylsiloxane and a copolymer thereof, and fluorine-based resins such as PTFE and vinylidene fluoride. Examples of the membrane shape (shape of the side wall) of the hollow fiber membrane 2 include a porous membrane, a microporous membrane, and a homogeneous membrane not having porosity (non-porous membrane). As the membrane form of the hollow fiber membrane 2, for example, a symmetrical membrane (homogeneous membrane) having homogeneous chemical or physical structure of the whole membrane, an asymmetric membrane (heterogeneous membrane) in which the chemical or physical structure of the membrane differs depending on the membrane portion. The asymmetric membrane (heterogeneous membrane) is a membrane having a non-porous dense layer and porosity. In this case, the dense layer may be formed at anywhere in the membrane so as to be located on a surface layer portion of the membrane or the inside of the porous membrane. The heterogeneous membrane includes a composite membrane having a different chemical structure and a multilayered structure membrane such as a three-layered structure. In particular, since a heterogeneous membrane using poly(4-methylpentene-1) resin includes a dense layer for blocking a liquid, it is particularly desirable for degassing a liquid other than water, for example, ink. In the case of a hollow fiber used for an external perfusion type, it is desirable that the dense layer is formed on the outer surface of the hollow fiber.

The hollow fiber membrane bundle 3 can be formed, for example, by a hollow fiber membrane sheet (not shown) in which a plurality of hollow fiber membranes 2 are woven in the form of a reed. In this case, for example, the hollow fiber membrane bundle 3 can be formed by a hollow fiber membrane sheet including thirty to ninety hollow fiber membranes 2 per inch. The hollow portion 3b which is used as an ink passage is formed at the inside of the hollow fiber membrane bundle 3 in the radial direction. The hollow portion 3b is defined by the inner peripheral surface 3a of the hollow fiber membrane bundle 3.

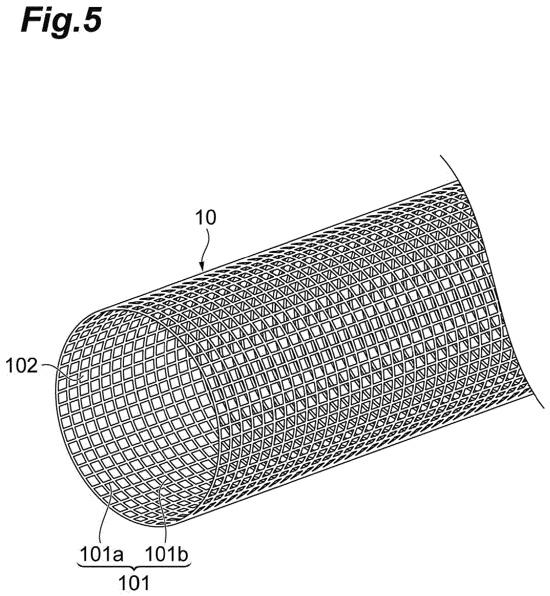

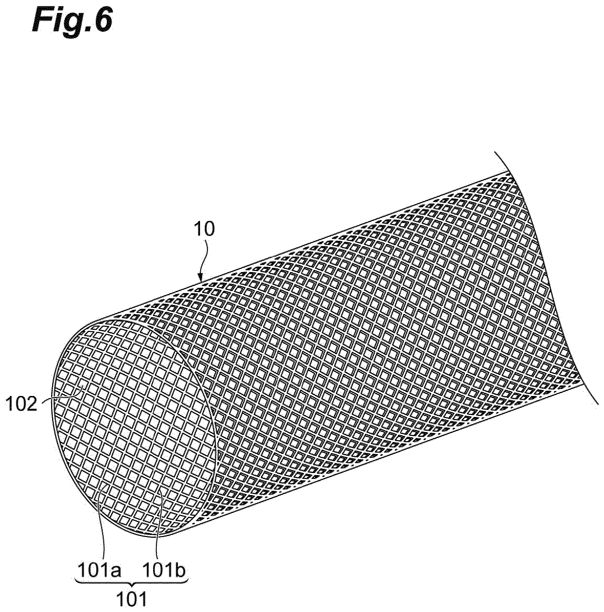

Figs. 5 and 6 are perspective views of support bodies. As shown in Figs. 2 to 6, the support body 10 is a member that contacts the inner peripheral surface 3a of the hollow fiber membrane bundle 3 and supports the hollow fiber membrane 2 from the inside of the hollow fiber membrane bundle 3 in the radial direction. The support body 10 is formed in a cylindrical shape (a pipe shape). An outer diameter of the support body 10 is set to a dimension which is substantially the same as an inner diameter of the hollow fiber membrane bundle 3. A thickness of the support body 10 can be appropriately set within, for example, a range in which the pressure drop of the ink passing through the inside of the support body 10 in the radial direction does is not high. Further, the thickness of the support body 10 can be appropriately set within, for example, a range in which the swollen hollow fiber membrane 2 can be supported.

The support body 10 is formed in a mesh shape. The mesh shape means a shape in which a plurality of linear portions 101 extending in different directions are connected to one another and a mesh 102 is formed by the plurality of linear portions 101. For this reason, the support body 10 does not have a function of equally distributing the ink to the entire hollow fiber membrane bundle 3 as in the known water supply pipe. As a shape of the mesh 102, for example, a square shape, a rectangular shape, a pentagonal shape, a hexagonal shape, a circular shape, an elliptical shape, etc. can be exemplified. An opening ratio of the support body 10 can be, for example, a range of 10% or more and is desirably a range from 20% to 80% and more desirably a range from 30% to 60%. Additionally, the opening ratio of the support body 10 means a ratio of the mesh 102 with respect to the area of the outer peripheral surface of the support body 10 including the mesh 102.

The support body 10 shown in Fig. 5 includes a plurality of first linear portions 101a which extend in a direction parallel to the axial direction of the support body 10 and are arranged in a circular shape and a plurality of second linear portions 101b which extend in a circular shape about the axis of the support body 10 and are respectively connected to the first linear portions 101a. The shape of the mesh 102 of the support body 10 shown in Fig. 5 is a square shape. The support body 10 shown in Fig. 6 includes a plurality of first linear portions 101a which extend in a direction inclined with respect to the axial direction of the support body 10 by a predetermined angle and a plurality of second linear portions 101b which extend in a direction inclined with respect to a direction opposite to the first linear portion 101a in the axial direction of the support body 10 by a predetermined angle and are respectively connected to the first linear portions 101a. The shape of the mesh 102 of the support body 10 shown in Fig. 6 is formed in a diamond shape.

As a cross-sectional shape of the linear portion 101, for example, a polygonal cross-section, a circular cross-section, and the like can be exemplified. Further, a wire diameter of the linear portion 101 can be appropriately set to, for example, a degree in which the swollen hollow fiber membrane 2 can be supported. For example, the support body 10 is desirably formed of resin from the viewpoint of ease of manufacturing. Examples of the resin used in the support body 10 include polypropylene and polyethylene and desirably include ultrahigh molecular weight polyethylene and high density polyethylene.

Then, the support body 10 is disposed between one end surface 3c and the other end surface 3d of the hollow fiber membrane bundle 3 in the direction of a center axis L1 of the hollow fiber membrane bundle 3. That is, the support body 10 enters the hollow fiber membrane bundle 3 without protruding from one end surface 3c and the other end surface 3d of the hollow fiber membrane bundle 3. In this case, it is desirable that the support body 10 is the same length as that of the hollow fiber membrane bundle 3 in the direction of the center axis L1 but may be shorter than the hollow fiber membrane bundle 3. Additionally, Fig. 2 shows a case where the support body 10 and the hollow fiber membrane bundle 3 are formed to have the same length and both end surfaces of the support body 10 are respectively located at one end surface 3c and the other end surface 3d of the hollow fiber membrane bundle 3.

The housing 4 includes a cylindrical body 5, a first lid portion 6, and a second lid portion 7.

The cylindrical body 5 is a part which receives the hollow fiber membrane bundle 3. The cylindrical body 5 is formed in a cylindrical shape extending in an axial direction L and both end portions of the cylindrical body 5 are opened. The first lid portion 6 is attached to one opening end portion 5a which is one opening end portion of the cylindrical body 5 and the second lid portion 7 is attached to the other opening end portion 5b which is the other opening end portion of the cylindrical body 5. The first lid portion 6 and the second lid portion 7 can be attached to the cylindrical body 5 by, for example, threading, fitting, adhering, or the like.

The first lid portion 6 is formed in a tapered shape to decrease in diameter as it goes away from the cylindrical body 5. A front end portion of the first lid portion 6 is provided with a supply port 6a which supplies ink into the first lid portion 6. The supply port 6a is a cylindrical opening and is formed on a center axis L2 of the cylindrical body 5. A connection portion 6b which is separably connected to the first ink supply pipe 14 extends from the supply port 6a along the axial direction L. The connection portion 6b is formed in a cylindrical shape and the inner peripheral surface of the connection portion 6b is provided with a female screw 6c into which the first ink supply pipe 14 is threaded. Additionally, the connection between the connection portion 6b and the first ink supply pipe 14 is not limited to threading and may be, for example, fitting.

The second lid portion 7 is formed in a tapered shape to decrease in diameter as it goes away from the cylindrical body 5. A front end portion of the second lid portion 7 is provided with an intake port 7a which suctions a gas from the inside of the housing 4. The intake port 7a is a cylindrical opening and is formed on the center axis L2 of the cylindrical body 5. A connection portion 7b which is separably connected to the intake pipe 17 extends from the intake port 7a along the axial direction L. The connection portion 7b is formed in a cylindrical shape and the inner peripheral surface of the connection portion 7b is provided with a female screw 7c into which the intake pipe 17 is threaded. Additionally, the connection between the connection portion 7b and the intake pipe 17 is not limited to threading and may be, for example, fitting.

A side wall 5c of the cylindrical body 5 is provided with a discharge port 5d which discharges the ink from the inside of the housing 4. The discharge port 5d is a cylindrical opening. The discharge port 5d is formed near the other opening end portion 5b in relation to the center in the axial direction L of the cylindrical body 5. A connection portion 5e which is separably connected to the second ink supply pipe 15 extends from the discharge port 5d in a direction orthogonal to the axial direction L. The connection portion 5e is formed in a cylindrical shape and the inner peripheral surface of the connection portion 5e is provided with a female screw 5f into which the second ink supply pipe 15 is threaded. Additionally, the connection between the connection between the discharge port 5d and the second ink supply pipe 15 is not limited to threading and may be, for example, fitting.

The cylindrical body 5, the first lid portion 6, and the second lid portion 7 are desirably formed of resin from the viewpoint of ease of manufacturing. In this case, the cylindrical body 5, the first lid portion 6, and the second lid portion 7 can be manufactured by injection molding. In consideration of a case where UV ink is used as the ink, the cylindrical body 5, the first lid portion 6, and the second lid portion 7 desirably have a color that does not transmit ultraviolet light, for example, black.

Then, one membrane bundle end portion 3e of the hollow fiber membrane bundle 3 is fixed to one opening end portion 5a of the cylindrical body 5 by a sealing portion 8 and the other membrane bundle end portion 3f of the hollow fiber membrane bundle 3 is fixed to the other opening end portion 5b of the cylindrical body 5 by a sealing portion 9.

The sealing portion 8 is formed of resin. As the resin used for the sealing portion 8, for example, epoxy resin, urethane resin, ultraviolet curable resin, and polyolefin resin such as polyethylene and polypropylene can be exemplified. The sealing portion 8 is only charged to an entire area other than the hollow portion 3b in a cross-section perpendicular to the axial direction L of the cylindrical body 5. That is, the sealing portion 8 is charged only between the hollow fiber membranes 2, into the hollow fiber membrane 2, and between the hollow fiber membrane bundle 3 and the inner wall of the cylindrical body 5 (see Fig. 3(a)). Then, the sealing portion 8 is provided with a communication port 8a which communicates the hollow portion 3b with the outside of the cylindrical body 5. For this reason, the ink which is supplied from the supply port 6a into the first lid portion 6 is supplied into the cylindrical body 5 only from the communication port 8a and is supplied to the outside of the hollow fiber membrane 2 inside the cylindrical body 5.

The sealing portion 9 is formed of the same resin as that of the sealing portion 8. The sealing portion 9 is charged to an entire area other than the inside of the hollow fiber membrane 2 in a cross-section perpendicular to the axial direction L of the cylindrical body 5. That is, the sealing portion 9 is not charged into the hollow fiber membrane 2 and is charged only between the hollow fiber membranes 2, between the hollow fiber membrane bundle 3 and the inner wall of the cylindrical body 5, and into the hollow portion 3b (see Fig. 3(b)). Additionally, when the support body 10 is also disposed in the other membrane bundle end portion 3f of the hollow fiber membrane bundle 3, the sealing portion 9 is also charged between the hollow fiber membrane bundle 3 and the support body 10 and into the mesh 102 of the support body 10. For this reason, it is possible to prevent the ink which is supplied to the cylindrical body 5 from flowing to the second lid portion 7 beyond the sealing portion 9. Further, since the inside of the hollow fiber membrane 2 communicates with the inside of the second lid portion 7, the inside of the hollow fiber membrane 2 is depressurized when air is suctioned from the intake port 7a by the suction pump 16.

The sealing portion 8 fixes one membrane bundle end portion 3e of the hollow fiber membrane bundle 3 to the cylindrical body 5, for example, so that the center axis L1 of one membrane bundle end portion 3e of the hollow fiber membrane bundle 3 and the center axis L2 of the cylindrical body 5 are located at the same position. Further, the sealing portion 9 fixes the other membrane bundle end portion 3f of the hollow fiber membrane bundle 3 to the cylindrical body 5, for example, so that the center axis L1 of the other membrane bundle end portion 3f of the hollow fiber membrane bundle 3 and the center axis L2 of the cylindrical body 5 are located at the same position. Additionally, the sealing portion 9 may fix the other membrane bundle end portion 3f of the hollow fiber membrane bundle 3 to the cylindrical body 5, for example, so that the center axis L1 of the other membrane bundle end portion 3f of the hollow fiber membrane bundle 3 is located at a position eccentric to the side opposite to the discharge port 5d with respect to the center axis L2 of the cylindrical body 5.

Additionally, it is desirable that a ratio between an inner diameter D of the cylindrical body 5 and a length of the hollow fiber membrane bundle 3 in the axial direction L is 1:1 to 1:6.

Next, an ink degassing method using the hollow fiber degassing module 1 will be described.

The ink which is supplied from the ink storage portion 12 to the first ink supply pipe 14 is supplied from the supply port 6a into the first lid portion 6. The ink which is supplied into the first lid portion 6 is supplied to the hollow portion 3b through the communication port 8a. The ink which is supplied to the hollow portion 3b is supplied to the gap between the hollow fiber membranes 2 through the mesh 102 of the support body 10 so that the ink flows to the outside of the cylindrical body 5 in the radial direction through the gap. That is, the ink which is supplied into the hollow portion 3b is supplied to the outside of the hollow fiber membrane 2 inside the cylindrical body 5. At this time, when the suction pump 16 is operated so that air inside the housing 4 is suctioned from the intake port 7a, the inside of the hollow fiber membrane 2 is depressurized. Then, when the ink passes between the hollow fiber membranes 2, dissolved gas and air bubbles are drawn into the hollow fiber membranes 2 from the ink. Accordingly, the ink is degassed. Then, the degassed ink flows from the discharge port 5d into the second ink supply pipe 15 to be supplied from the second ink supply pipe 15 to the inkjet head 13.

At this time, the hollow fiber membrane 2 is swollen by the ink with the passage of time. Additionally, the swelling speed and swelling degree of the hollow fiber membrane 2 are changed in accordance with the material, the membrane shape, the membrane form, and the like of the hollow fiber membrane 2 and are also changed in accordance with the type of ink. For example, when polyolefin resin is used as the material of the hollow fiber membrane 2 and ceramic ink in which ceramic powder is dispersed in a solvent is used as the ink, the swelling speed and swelling degree of the hollow fiber membrane 2 are particularly large. Then, the swollen hollow fiber membrane 2 tries to be flat and to enter the hollow portion 3b.

Herein, the solvent used in the ceramic ink is not particularly limited as long as it does not impair the effect of the invention, and known solvents may be used. Specific examples thereof include glycols such as ethylene glycol, diethylene glycol, and triethylene glycol; glycol monoalkyl ethers such as 3-methoxy-3-methylbutanol and 3-methoxybutanol; glycol dialkyl ethers such as diethylene glycol diethyle ether, diethylene glycol methyl ethyl ether, diethylene glycol methyl butyl ether, triethylene glycol methyl butyl ether, and tetraethylene glycol dimethyl ether; glycol monoacetates such as ethylene glycol monobutyl ether acetate, diethylene glycol monobutyl ether acetate, and propylene glycol monomethyl ether acetate; glycol diacetates; alcohols such as ethanol, n-propanol, isopropanol, n-butanol, 2-butanol, and 2-methyl-1-propanol; ketones such as acetone, methyl ethyl ketone, methyl-n-propyl ketone, methyl isopropyl ketone, methyl-n-butyl ketone, methyl isobutyl ketone, methyl-n-amyl ketone, methyl isoamyl ketone, diethyl ketone, ethyl n-propyl ketone, ethyl isopropyl ketone, ethyl-n-butyl ketone, ethyl isobutyl ketone, di-n-propyl ketone, diisobutyl ketone, cyclohexanone, methylcyclohexanone, and isophorone; acetic acid esters such as methyl acetate, ethyl acetate, n-propyl acetate, isopropyl acetate, n-butyl acetate, isobutyl acetate, hexyl acetate, octyl acetate, 2-methylpropyl acetate, and 3-methylbutyl acetate; lactic acid esters such as methyl lactate, ethyl lactate, and butyl lactate; saturated hydrocarbons such as n-hexane, isohexane, n-nonane, isononane, dodecane, and isododecane; unsaturated hydrocarbons such as 1-hexene, 1-heptene, and 1-octene; cyclic saturated hydrocarbons such as cyclohexane, cycloheptane, cyclooctane, cyclodecane, and decalin; cyclic unsaturated hydrocarbons such as cyclohexene, cycloheptene, cyclooctene, 1,1,3,5,7-cyclooctatetraene, and cyclododecene; aromatic hydrocarbons such as benzene, toluene, and xylene; terpenes; ethers; cyclic imides; 3-alkyl-2-oxazolidinone such as 3-methyl-2-oxazolidinone and 3-ethyl-2-oxazolidinone; N-alkyl pyrrolidone such as N-methyl-2-pyrrolidone and N-ethyl-2-pyrrolidone; lactones such as γ-butyrolactone and ε-caprolactone; and nitrogen-containing solvents such as β-alkoxypropionamide.

However, since the support body 10 contacts the inner peripheral surface 3a of the hollow fiber membrane bundle 3 which defines the hollow portion 3b, it is possible to suppress the swollen hollow fiber membrane 2 from being twisted and flattened and from entering the hollow portion 3b. As a result, in the hollow fiber degassing module 1, since it is possible to suppress the ink passage from being narrowed or blocked even when the hollow fiber membrane 2 is swollen, it is possible to suppress a sudden increase in pressure drop of the ink.

In this way, the hollow fiber degassing module 1 according to the embodiment is of an external perfusion type which degases the ink by supplying the ink to the outside of the hollow fiber membrane 2 and depressurizing the inside of the hollow fiber membrane 2. For this reason, it is possible to suppress the pressure drop of ink to a low level. Accordingly, for example, even when the hollow fiber degassing module 1 is mounted on the inkjet printer 11 which supplies the ink from the ink storage portion 12 to the inkjet head 13 by the own weight of the ink, the ink can be appropriately supplied to the inkjet head 13.

Then, since the hollow fiber degassing module 1 includes the support body 10 which contacts the inner peripheral surface 3a of the hollow fiber membrane bundle 3, each hollow fiber membrane 2 is supported by the support body 10 from the center side of the hollow fiber membrane bundle 3 in the radial direction. For this reason, it is possible to suppress the hollow fiber membrane 2 from being twisted even when the hollow fiber membrane 2 is swollen by the ink. That is, it is possible to suppress the swollen hollow fiber membrane 2 from entering the hollow portion 3b of the hollow fiber membrane bundle 2 serving as the ink passage so that the hollow portion 3b is narrowed or blocked. Further, it is possible to suppress the swollen hollow fiber membrane 2 from narrowing or blocking a gap between the hollow fiber membranes 2. In this way, since it is possible to suppress the ink passage from being narrowed or blocked even when the hollow fiber membrane 2 is swollen, it is possible to suppress a sudden increase in pressure drop of the hollow fiber degassing module 1.

Further, since the support body 10 is formed in a cylindrical shape, the inner peripheral surface 3a of the hollow fiber membrane bundle 3 can be entirely supported.

Further, since the support body 10 has a mesh shape, it is possible to suppress an increase in pressure drop when the ink passes through the support body 10. Accordingly, it is possible to suppress an increase in initial pressure of the hollow fiber degassing module.

Further, since the opening ratio of the support body 10 is set to 10% or more, it is possible to appropriately suppress an increase in initial pressure of the hollow fiber degassing module. Further, since the opening ratio of the support body 10 is set to 80% or less, it is possible to suppress a decrease in support force for the hollow fiber membrane 2 using the support body 10.

Further, since the support body 10 is disposed between one end surface 3c and the other end surface 3d of the hollow fiber membrane bundle 3, the support body 10 can be received inside the cylindrical body 5. Accordingly, since the hollow fiber degassing module 1 is easily manufactured, it is possible to suppress an increase in manufacturing cost of the hollow fiber degassing module 1.

Further, in the inkjet printer 11 according to the embodiment, since the hollow fiber degassing module 1 is attached to the ink passage including the first ink supply pipe 14 and the second ink supply pipe 15, it is possible to suppress a sudden increase in pressure drop of the ink passage and to degas the ink for a long period of time. Accordingly, for example, even in the inkjet printer 11 which supplies the ink from the ink storage portion 12 to the inkjet head 13 by the own weight of the ink, the ink can be appropriately supplied to the inkjet head 13.

While the preferred embodiment of the invention has been described, the invention is not limited to the above-described embodiment. For example, in the above-described embodiment, a case has been described in which the support body has a cylindrical shape, but the support body may have any shape as long as the hollow fiber membrane is supported and the hollow fiber membrane is suppressed from entering the hollow portion. Further, in the above-described embodiment, a case has been described in which the support body has a mesh shape, but the support body may not have a mesh shape as long as the hollow fiber membrane is supported and the hollow fiber membrane is suppressed from entering the hollow portion. Further, in the above-described embodiment, the ink has been exemplified as a liquid to be degassed, but the liquid to be degassed may be a liquid other than the ink. Further, in the above-described embodiment, a case has been described in which the ink is supplied from the supply port 6a into the housing 4 and the ink inside the housing 4 is discharged from the discharge port 5d, but the inlet and the outlet of the ink may be reversed. That is, the ink may be supplied from the discharge port 5d into the housing 4 and the ink inside the housing 4 may be discharged from the supply port 6a.

### [Examples]

### Next, examples of the invention will be described, but the invention is not limited to the following examples

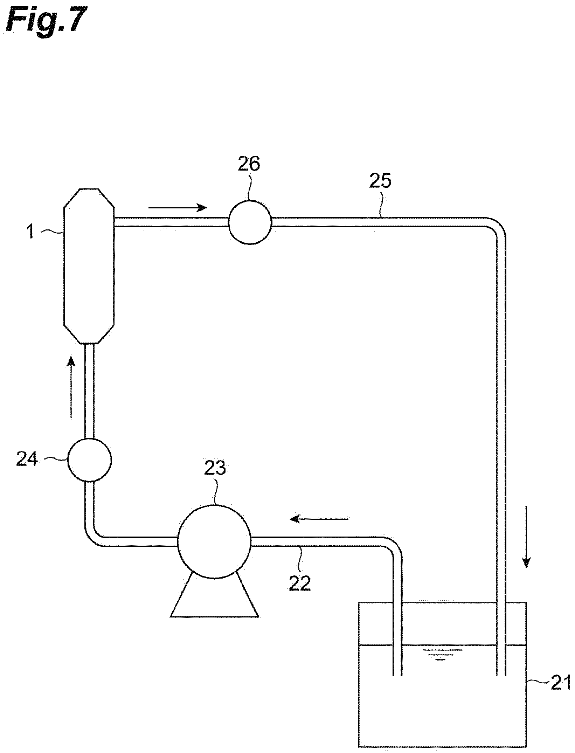

Hollow fiber degassing module of Examples 1 to 3 and hollow fiber degassing modules of Comparative Examples 1 and 2 were prepared and an increase in pressure drop due to the circulation of ink in a test circuit shown in Fig. 7 was measured.

### (Test Circuit)

As shown in Fig. 7, the test circuit has a configuration in which a first ink supply pipe 22 inserted into an ink tank 21 storing ink is connected to a supply port of the hollow fiber degassing module and a pump 23 feeding ink inside the first ink supply pipe 22 to the hollow fiber degassing module and an inlet pressure gauge 24 measuring a pressure of the ink inside the first ink supply pipe 22 are attached to the first ink supply pipe 22. Further, the test circuit has a configuration in which a second ink supply pipe 25 inserted into the ink tank 21 is connected to a discharge port of the hollow fiber degassing module and an outlet pressure gauge 26 measuring a pressure of ink inside the second ink supply pipe 25 is attached to the second ink supply pipe 25.

### (Example 1)

The hollow fiber degassing module of Example 1 was prepared as below.

In Example 1, as a base module, a hollow fiber degassing module of SEPAREL EF-G5 manufactured by DIC Corporation was used. Then, in the base module, a support body obtained by winding a dieplanetron sheet (having a mesh size (3 mm × 3 mm) and a thickness (1.4 mm)) manufactured by DAINIPPON PLASTICS CO., LTD. into a cylindrical shape so that a pipe diameter φ became 14 mm was brought into contact with an inner peripheral surface of a hollow fiber membrane bundle to thereby obtain the hollow fiber membrane module of Example 1. More specifically, a hollow fiber membrane having an inner diameter of 100 µm and an outer diameter of 180 µm and having a side wall (membrane) of a heterogeneous structure formed of poly-4 methyl pentene-1 was prepared. Next, a large number of hollow fiber membranes lined up in the same row were woven in a reed shape by a warp so that the number of hollow fiber membranes became sixty one per inch to thereby manufacture a hollow fiber membrane sheet having a predetermined length. Next, the hollow fiber membrane sheet was wound on the cylindrical support body to thereby prepare a cylindrical hollow fiber membrane bundle. Next, the hollow fiber membrane bundle was inserted into a cylindrical body of a housing, one membrane bundle end portion of the hollow fiber membrane bundle was fixed to one opening end portion of the cylindrical body by a sealing portion, and the other membrane bundle end portion of the hollow fiber membrane bundle was fixed to the other opening end portion of the cylindrical body by a sealing portion. Then, a first lid portion was attached to one opening end portion of the cylindrical body and a second lid portion was attached to the other opening end portion of the cylindrical body to thereby prepare the hollow fiber degassing module of Example 1. Main conditions of the hollow fiber degassing module of Example 1 are shown in Table 1.

### (Example 2)

As a support body, a netron pipe (PX-225-2000, BK, outer diameter (14.6 mm), inner diameter (13.6 mm), pitch (extrusion 10 mm, width reference value 0.8 mm) manufactured by MORIROKU CHEMICALS COMPANY, LTD., Pipe diameter φ (14 mm)) was used. The hollow fiber degassing module of Example 2 was prepared while the other conditions were the same as those of Example 1. Main conditions of the hollow fiber degassing module of Example 2 are shown in Table 1.

### (Example 3)

As a support body, a netron pipe (PX-225-2000, BK, outer diameter (14.6 mm), inner diameter (13.6 mm), pitch (extrusion 10 mm, width reference value 0.8 mm) manufactured by MORIROKU CHEMICALS COMPANY, LTD., Pipe diameter φ (10 mm)) was used. The hollow fiber degassing module of Example 3 was prepared while the other conditions were the same as those of Example 1. Main conditions of the hollow fiber degassing module of Example 3 are shown in Table 1.

### (Comparative Example 1)

The hollow fiber degassing module of Comparative Example 1 was prepared in the same manner as Example 2 except that the support body was removed from the hollow fiber membrane bundle after the resin of the sealing portion was cured. That is, a hollow fiber degassing module of SEPAREL EF-G5 manufactured by DIC Corporation was used as the hollow fiber degassing module of Comparative Example 1. Main conditions of the hollow fiber degassing module of Comparative Example 1 are shown in Table 1.

**[Table 1]**

| | Base module | Support body | Pipe diameter ϕ of support body |
|---|---|---|---|
| Example 1 | SEPAREL EF-G5 manufactured by DIC Corporation | Dieplanetron sheet manufactured by DAINIPPON PLASTICS CO., LTD. Mesh size (3 mm × 3 mm) Thickness (1.4 mm) | 14 mm |
| Example 2 | SEPAREL EF-G5 manufactured by DIC Corporation | Netron pipe PX-225-2000 BK manufactured by MORIROKU CHEMICALS COMPANY, LTD. Outer diameter (14.6 mm), Inner diameter (13.6 mm) Pitch (extrusion (10 mm) width reference value (0.8 mm)) | 14 mm |
| Example 3 | SEPAREL EF-G5 manufactured by DIC Corporation | Netron pipe PX-225-2000 BK manufactured by MORIROKU CHEMICALS COMPANY, LTD. Outer diameter (14.6 mm), Inner diameter (13.6 mm) Pitch (extrusion (10 mm) width reference value (0.8 mm)) | 10 mm |
| Comparative Example 1 | SEPAREL EF-G5 manufactured by DIC Corporation | No | No |

### (Experiment)

In an experiment, ceramic ink containing a hydrocarbon solvent ("Exxsol (registered trademark) D130" (Hydrocarbones, C14-C18, n-alkanes, iso-alkanes, cyclics, aromatics, etc) manufactured by Exxon Mobil Co., Ltd.) was used and the set temperature of the ink was 45°C.

Then, (1) the ink was circulated at an ink set flow rate of 200 g/min, a difference between the inlet pressure measured by the inlet pressure gauge 24 and the outlet pressure measured by the outlet pressure gauge 26 was calculated as a pressure drop, and the flow rate of ink was measured by a flow meter (not shown). Next, (2) the ink was circulated at an ink set flow rate of 1000 g/min, a difference between the inlet pressure measured by the inlet pressure gauge 24 and the outlet pressure measured by the outlet pressure gauge 26 was calculated as a pressure drop, and the flow rate of ink was measured by a flow meter (not shown). Additionally, the pressure drop calculated by (1) and (2) was set to an initial value.

Next, (3) the set flow rate of ink was set to 1000 g/min and was left for an arbitrary time. Next, (4) the ink was circulated at an ink set flow rate of 200 g/min, a difference between the inlet pressure measured by the inlet pressure gauge 24 and the outlet pressure measured by the outlet pressure gauge 26 was calculated as a pressure drop, and the flow rate of ink was measured by a flow meter (not shown). Next, (5) the ink was circulated at an ink set flow rate of 1000 g/min, a difference between the inlet pressure measured by the inlet pressure gauge 24 and the outlet pressure measured by the outlet pressure gauge 26 was calculated as a pressure drop, and the flow rate of ink was measured by a flow meter (not shown). Additionally, the leave time of (3) was set to 23 hours in Example 1, was set to two types of 24 hours and 47 hours in Example 2, and was set to two types of 23 hours and 47 hours in Example 3.

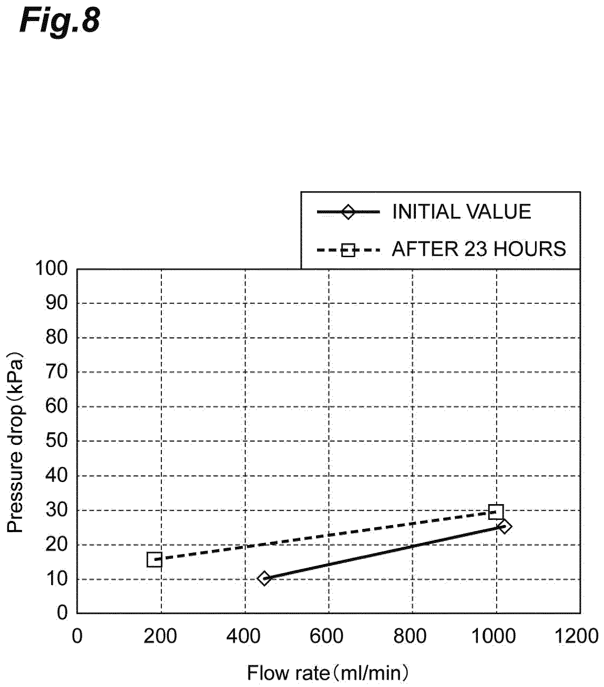

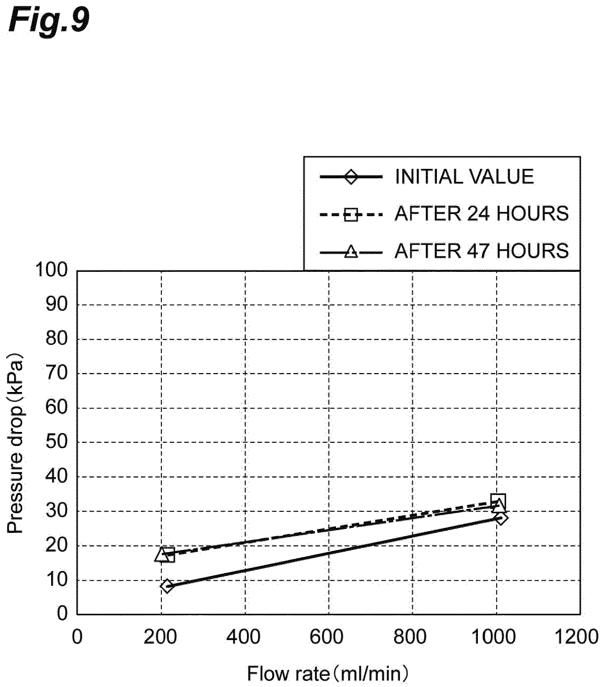

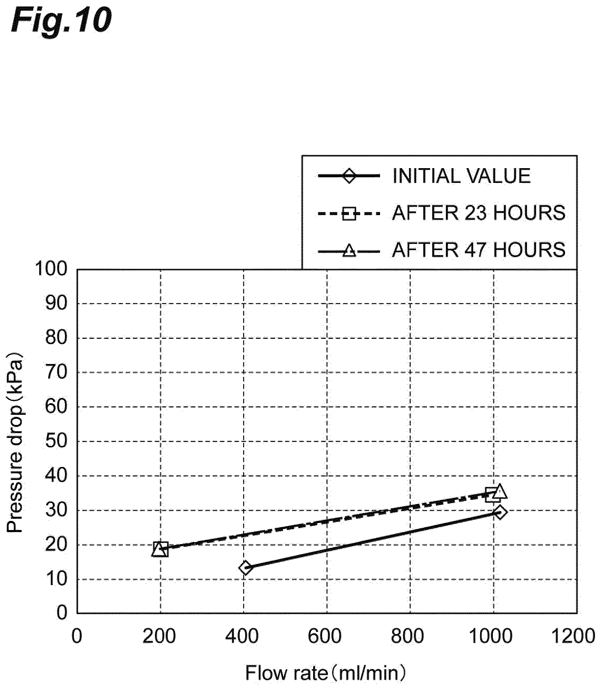

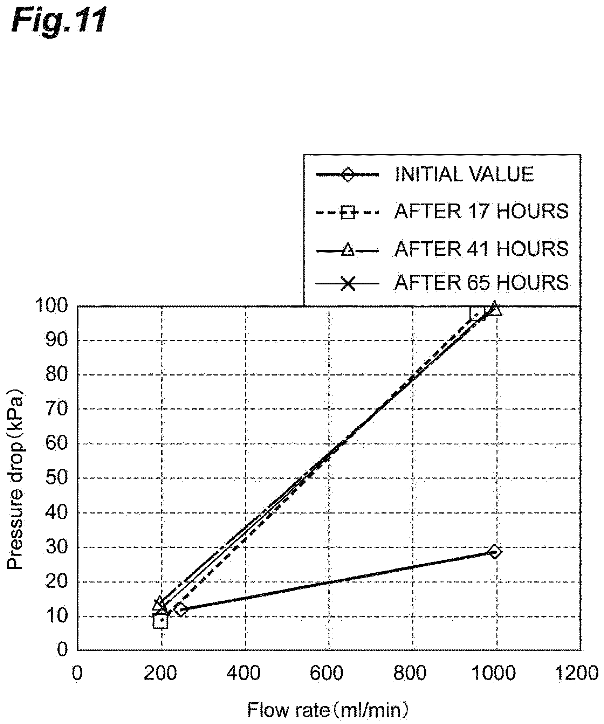

Then, a ratio of the pressure drop calculated by (1) and (2) with respect to the pressure drop calculated by (4) and (5) was calculated as a pressure drop increase rate. The experiment results of Examples 1 to 3 and Comparative Example 1 are shown in Table 2. Further, a graph of the experiment result of Example 1 is shown in Fig. 8, a graph of the experiment result of Example 2 is shown in Fig. 9, a graph of the experiment result of Example 3 is shown in Fig. 10, and a graph of the experiment result of Comparative Example 1 is shown in Fig. 11.

**[Table 2]**

| | Measurement timing | Set flow rate (g/min) | Measurement flow rate (g/min) | Inlet pressure (kPa) | Outlet pressure (kPa) | Pressure drop (kPa) |
|---|---|---|---|---|---|---|
| Example 1 | Immediately after circulation | 200 | 445.92 | 7.2 | 2.2 | 10.2 |
| | | 1000 | 1018.52 | 34.9 | 10.1 | 25.3 |
| | After circulation for 23 hours | 200 | 184.12 | 8.3 | 0 | 15.7 |
| | | 1000 | 998.16 | 38.6 | 9.6 | 29.5 |
| Example 2 | Immediately after circulation | 200 | 215.24 | 9.9 | 4 | 8.2 |
| | | 1000 | 1010.12 | 38 | 10.4 | 28.1 |
| | After circulation for 24 hours | 200 | 215.24 | 9.8 | 0.4 | 17.3 |
| | | 1000 | 1003.6 | 42 | 9.6 | 32.9 |
| | After circulation for 47 hours | 200 | 201.72 | 8.9 | 0.3 | 17.6 |
| | | 1000 | 1005.92 | 41.1 | 9.8 | 31.7 |
| Example 3 | Immediately after circulation | 200 | 405.2 | 12.2 | 2.6 | 13.3 |
| | | 1000 | 1015.64 | 38.9 | 10.1 | 29.4 |
| | After circulation for 23 hours | 200 | 201.2 | 10.7 | 0.4 | 18.7 |
| | | 1000 | 998.44 | 43.5 | 9.4 | 34.5 |
| | After circulation for 47 hours | 200 | 196.16 | 9.2 | 0.4 | 18.8 |
| | | 1000 | 1015.36 | 44.8 | 9.7 | 35.6 |
| Comparative Example 1 | Immediately after circulation | 200 | 247.68 | 7.3 | -0.8 | 11.9 |
| | | 1000 | 996.04 | 40.9 | 13 | 28.7 |
| | After circulation for 17 hours | 200 | 198.08 | 10.3 | -1 | 8.6 |
| | | 1000 | 954.4 | 109.3 | 12.4 | 97.8 |
| | After circulation for 41 hours | 200 | 195.8 | 9.5 | -1 | 13.9 |
| | | 1000 | 995 | 111.6 | 12.8 | 99.4 |
| | After circulation for 65 hours | 200 | 202.56 | 9.1 | -0.9 | 12.5 |
| | | 1000 | 994.08 | 112.6 | 13.3 | 100.1 |

### (Evaluation 1)

As shown in Table 2 and Figs. 8 to 10, no sudden increase in pressure drop was observed in any of Examples 1 to 3. From this result, it was found that a sudden increase in pressure drop can be suppressed due to the support body. It was also found that the hollow fiber membrane can be supported when the thickness of the support body is about 1 mm. Further, it was proved that the pipe diameter φ of the support body did not change greatly even at 10 mm or 14 mm. Further, it was also found that the pressure drop did not greatly change after the circulation of ink for about one day in any of Examples 1 to 3.

### (Evaluation 2)

As shown in Table 2 and Figs. 9 and 11, no sudden increase in pressure drop was observed in Example 2, but a sudden increase in pressure drop was found at a time shorter than one day in Comparative Example 1 as a result of comparison between Example 2 and Comparative Example 1. In particular, the pressure drop increase rate becomes noticeable when the set flow rate of ink was 1000 g/min. From this result, it was found that an effect of suppressing a sudden increase in pressure drop can be obtained by providing the support body compared with the case without the support body. Also in Comparative Example 1, it was also found that the pressure drop did not greatly change after the ink was circulated for about one day.

### Reference Signs List

1: hollow fiber degassing module, 2: hollow fiber membrane, 3: hollow fiber membrane bundle, 3a: inner peripheral surface, 3b: hollow portion, 3c: one end surface, 3d: other end surface, 3e: one membrane bundle end portion, 3f: other membrane bundle end portion, 4: housing, 5: cylindrical body, 5a: one opening end portion, 5b: other opening end portion, 5c: side wall, 5d: discharge port, 5e: connection portion, 5f: female screw, 6: first lid portion, 6a: supply port, 6b: connection portion, 6c: female screw, 7: second lid portion, 7a: intake port, 7b: connection portion, 7c: female screw, 8: sealing portion, 8a: communication port, 9: sealing portion, 10: support body, 101: linear portion, 101a: first linear portion, 101b: second linear portion, 102: mesh, 11: inkjet printer, 12: ink storage portion, 13: inkjet head, 14: first ink supply pipe, 15: second ink supply pipe, 16: suction pump, 17: intake pipe, 21: ink tank, 22: first ink supply pipe, 23: pump, 24: inlet pressure gauge, 25: second ink supply pipe, 26: outlet pressure gauge, L: axial direction, L1: center axis of hollow fiber membrane bundle, L2: center axis of cylindrical body.

## Claims

1. A hollow fiber degassing module (1) which includes
a hollow fiber membrane bundle (3) obtained by bundling a plurality of hollow fiber membranes (2) in a cylindrical shape,
a cylindrical body (5) receiving the hollow fiber membrane bundle (3) and extending in an axial direction and degassing a liquid by supplying the liquid to a gap between the hollow fiber membranes (2) from a hollow portion (3c) of the hollow fiber membrane bundle (3) and depressurizing the inside of the hollow fiber membrane (2),
a supply port (6a) communicating with the gap between the hollow fiber membranes (2) to supply the liquid, and
an intake port (7a) communicating with insides of the hollow fiber membranes (2) to suction a gas,
the hollow fiber degassing module (1) **characterized by**:
a support body (10) which contacts an inner peripheral surface of the hollow fiber membrane bundle (3), wherein
the support body (10) has a cylindrical shape and has a mesh shape, and
the support body (10) is disposed between one end surface and the other end surface of the hollow fiber membrane bundle (3) in a center axis direction of the hollow fiber membrane (2).

2. An inkjet printer (11) in which ink stored in an ink storage portion (12) is supplied to an inkjet head (13) through an ink passage (14, 15),
wherein the hollow fiber degassing module (1) according to claim 1 is attached to the ink passage (14, 15).

3. A liquid degassing method of degassing an ink by supplying the ink to a gap between hollow fiber membranes (2) from a hollow portion (3b) of a hollow fiber membrane bundle (3) and depressurizing the inside of the hollow fiber membrane (2) using the hollow fiber degassing module (1) according to claim 1.

4. The liquid degassing method according to claim 3, wherein the liquid is UV ink or ceramic ink.

5. The liquid degassing method according to claim 4, wherein the liquid which is the ceramic ink is at least one kind selected from the group consisting of glycols, glycol monoalkyl ethers, glycol dialkyl ethers, glycol monoacetates, glycol diacetates, alcohols, ketones, acetic acid esters, lactic acid esters, saturated hydrocarbons, unsaturated hydrocarbons, cyclic saturated hydrocarbons, cyclic unsaturated hydrocarbons, aromatic hydrocarbons, terpenes, ethers, cyclic imides, 3-alkyl-2-oxazolidinone, Nalkyl pyrrolidone, lactones, and nitrogen-containing solvents.

## Patentansprüche

1. Hohlfaserentgasungsmodul (1), das hat
ein Hohlfasermembranbündel (3), das durch Bündeln einer Vielzahl von Hohlfasermembranen (2) in einer zylindrischen Form erhalten wird,
einen zylindrischen Körper (5), der das Hohlfasermembranbündel (3) aufnimmt und sich in axialer Richtung erstreckt und eine Flüssigkeit entgast, indem die Flüssigkeit aus einem hohlen Abschnitt (3c) des Hohlfasermembranbündels (3) einem Spalt zwischen den Hohlfasermembranen (2) zugeführt wird und das Innere der Hohlfasermembran (2) druckentlastet wird,
einen Zuführungsanschluss (6a), der mit dem Spalt zwischen den Hohlfasermembranen (2) in Verbindung steht, um die Flüssigkeit zuzuführen, und
einen Einlassanschluss (7a), der mit den Innenseiten der Hohlfasermembranen (2) in Verbindung steht, um ein Gas einzusaugen,
das Hohlfaserentgasungsmodul (1) **gekennzeichnet ist durch**:
einen Stützkörper (10), der in Berührung mit einer Innenumfangsfläche des Hohlfasermembranbündels (3) steht, wobei
der Stützkörper (10) eine zylindrische Form und eine Maschenform aufweist und
der Stützkörper (10) zwischen einer Endfläche und der anderen Endfläche des Hohlfasermembranbündels (3) in Richtung der Mittelachse der Hohlfasermembran (2) vorgesehen ist.

2. Tintenstrahldrucker (11), in dem in einem Tintenspeicherabschnitt (12) gespeicherte Tinte einem Tintenstrahlkopf (13) durch einen Durchgang (14, 15) zugeführt wird,
wobei das Hohlfaserentgasungsmodul (1) gemäß Anspruch 1 an dem Durchgang (14, 15) angebracht ist.

3. Flüssigkeitsentgasungsverfahren zum Entgasen einer Tinte durch Zuführen der Tinte zu einem Spalt zwischen Hohlfasermembranen (2) von einem hohlen Abschnitt (3b) eines Hohlfasermembranbündels (3) und Druckentlastung des Inneren der Hohlfasermembran (2) unter Verwendung des Hohlfaserentgasungsmoduls (1) gemäß Anspruch 1.

4. Flüssigkeitsentgasungsverfahren gemäß Anspruch 3, wobei die Flüssigkeit UV-Tinte oder Keramiktinte ist.

5. Flüssigkeitsentgasungsverfahren gemäß Anspruch 4, wobei die Flüssigkeit, die die keramische Tinte ist, mindestens eine Art ist, die aus der Gruppe Glykolen, Glykolmonoalkylethern, Glykoldialkylethern, Glykolmonoacetaten, Glykoldiacetaten, Alkoholen, Ketonen, Essigsäureestern, Milchsäureestern, gesättigten Kohlenwasserstoffen, ungesättigten Kohlenwasserstoffen, zyklischen gesättigten Kohlenwasserstoffen, zyklischen ungesättigten Kohlenwasserstoffen, aromatischen Kohlenwasserstoffen, Terpenen, Ethern, zyklischen Imiden, 3-Alkyl-2-Oxazolidinonen, N-Alkylpyrrolidonen, Lactonen und stickstoffhaltigen Lösungsmitteln ausgewählt ist.

## Revendications

1. Module de dégazage à fibres creuses (1) qui comprend
un faisceau de membranes sous forme de fibres creuses (3) obtenu par regroupement en faisceau d'une pluralité de membranes sous forme de fibres creuses (2) en une forme cylindrique, un corps cylindrique (5) logeant le faisceau de membranes sous forme de fibres creuses (3) et s'étendant dans une direction axiale et dégazant un liquide par introduction du liquide dans un espace entre les membranes sous forme de fibres creuses (2) à partir d'une partie creuse (3c) du faisceau de membranes sous forme de fibres creuses (3) et abaissement de la pression de l'intérieur de la membrane sous forme de fibres creuses (2),
un orifice d'introduction (6a) en communication avec l'espace entre les membranes sous forme de fibres creuses (2) pour introduire le liquide et
un orifice de sortie (7a) en communication avec les intérieurs des membranes sous forme de fibres creuses (2) pour aspirer un gaz,
le module de dégazage à fibres creuses (1) étant **caractérisé par** :
un corps de support (10) qui est en contact avec une surface périphérique interne du faisceau de membranes sous forme de fibres creuses (3),
le corps de support (10) ayant une forme cylindrique et ayant une forme de treillis et
le corps de support (10) étant disposé entre une surface d'extrémité et l'autre surface d'extrémité du faisceau de membranes sous forme de fibres creuses (3) dans une direction de l'axe central de la membrane sous forme de fibres creuses (2).

2. Imprimante à jet d'encre (11) dans laquelle de l'encre stockée dans une partie de stockage d'encre (12) est introduite dans une tête de jet d'encre (13) par le biais d'une voie de passage d'encre (14, 15),
le module de dégazage à fibres creuses (1) selon la revendication 1 étant fixé à la voie de passage d'encre (14, 15).

3. Procédé de dégazage de liquide consistant à dégazer une encre par introduction de l'encre dans un espace entre des membranes sous forme de fibres creuses (2) à partir d'une partie creuse (3b) d'un faisceau de membranes sous forme de fibres creuses (3) et abaissement de la pression de l'intérieur de la membrane sous forme de fibres creuses (2) à l'aide du module de dégazage à fibres creuses (1) selon la revendication 1.

4. Procédé de dégazage de liquide selon la revendication 3, le liquide étant de l'encre UV ou de l'encre céramique.

5. Procédé de dégazage de liquide selon la revendication 4, le liquide qui est l'encre céramique en étant au moins une sorte choisie dans le groupe constitué par les glycols, les éthers monoalkyliques de glycols, les éthers dialkyliques de glycols, les monoacétates de glycols, les diacétates de glycols, les alcools, les cétones, les esters de l'acide acétique, les esters de l'acide lactique, les hydrocarbures saturés, les hydrocarbures insaturés, les hydrocarbures saturés cycliques, les hydrocarbures insaturés cycliques, les hydrocarbures aromatiques, les terpènes, les éthers, les imides cycliques, une 3-alkyl-2-oxazolidinone, une N-alkylpyrrolidone, les lactones et les solvants contenant de l'azote.
